(19) **Europäisches Patentamt**
**European Patent Office**
**Office européen des brevets**

(11) **EP 1 382 244 B1**

(12) **EUROPEAN PATENT SPECIFICATION**

(45) Date of publication and mention
of the grant of the patent:
**27.02.2008 Bulletin 2008/09**

(51) Int Cl.:
**A01N 25/14** *(2006.01)* **A01N 25/08** *(2006.01)*

(21) Application number: **02714570.5**

(22) Date of filing: **09.04.2002**

(86) International application number:
**PCT/JP2002/003556**

(87) International publication number:
**WO 2002/087324 (07.11.2002 Gazette 2002/45)**

(54) **GRANULAR COMPOSITIONS AND PROCESS FOR PRODUCING THE SAME**

GRANULATFÖRMIGE ZUSAMMENSETZUNGEN UND VERFAHREN ZU IHRER HERSTELLUNG

COMPOSITIONS GRANULAIRES ET LEUR PROCEDE DE PRODUCTION

(84) Designated Contracting States:
**AT BE CH CY DE DK ES FI FR GB GR IE IT LI LU MC NL PT SE TR**

(30) Priority: **24.04.2001 JP 2001125190**

(43) Date of publication of application:
**21.01.2004 Bulletin 2004/04**

(73) Proprietor: **KUMIAI CHEMICAL INDUSTRY CO., LTD.**
**Tokyo 110-0008 (JP)**

(72) Inventors:
• **KURITA, Kazunori**
  **Shimizu-shi, Shizuoka 424-0052 (JP)**
• **MISUMI, Yuji**
  **Ogasa-gun, Shizuoka 439-0031 (JP)**

(74) Representative: **Hartz, Nikolai et al**
**Wächtershäuser & Hartz**
**Patentanwälte**
**Weinstrasse 8**
**80333 München (DE)**

(56) References cited:
**EP-A- 0 503 869** **GB-A- 2 234 678**
**JP-A- 2 015 002** **JP-A- 61 286 302**
**US-A- 4 666 940**

**Description**

TECHNICAL FIELD

The present invention relates to a novel granular composition excellent in the granulation properties.

BACKGROUND ART

A pesticide is, in many cases, formulated into a dust, a granule, a wettable powder, an emulsifiable concentrate, SC, EW or the like and then applied. Among them, the dust and the granule are applied as they are formulated or by means of an application machine, while the wettable powder, the emulsifiable concentrate, SC and EW are applied after being diluted to a prescribed concentration mainly by water or the like.

The dust is a powdery product formulated by pulverizing a pesticidal active ingredient or having it adsorbed on a highly oil-absorptive powder, followed by pulverization, and blending a mineral carrier such as clay and, if necessary, physical property-improving agents, etc. Such a powdery product is applied as it is by means of an application machine, whereby there is a problem such that the powder is likely to scatter at the time of introducing the dust into the application machine or at the time of the application of the dust, such being undesirable to the heath of the operator.

Accordingly, with respect to a pesticidal formulation of the type which is applied as formulated, there has been an attempt in recent years to change it to a granule.

The granule is one prepared by mixing a pesticidal active ingredient, a binder and, if necessary, other adjuvants such as a surfactant, followed by granulation into granules, or one having a pesticidal active ingredient adsorbed or coated on grain nuclei, whereby by the granulation, a drawback such as dusting or difficulty in dosing of a dust can be eliminated.

The emulsifiable concentrate is, in most cases, formulated by dissolving a pesticidal active ingredient in an organic solvent and adding an emulsifier or the like thereto. Accordingly, so long as the pesticidal active ingredient is soluble in an organic solvent, formulation is possible. Further, the organic solvent to be used is, in many cases, flammable and thus has a possible danger of fire, etc., and accordingly, adequate care is required also for its handling, transportation or storage. Further, it also has a problem of toxicity or phytotoxicity derived from the use of the organic solvent.

On the other hand, as is different from the emulsifiable concentrate, the wettable powder is formulated by pulverizing a pesticidal active ingredient into fine particles or having it adsorbed on a highly oil-absorptive fine powder, followed by pulverization and blending a surfactant having dispersibility and wet ductility. Accordingly, even a pesticidal active ingredient which is not soluble in an organic solvent, can be formulated, and it requires no organic solvent, whereby there will be no danger of fire or the like in its handling, transportation or storage.

However, a conventional common wettable powder has the following drawbacks. Namely, it is composed of fine particles including the pesticidal active ingredient, whereby there are problems such that it is bulky with a small apparent specific gravity, a fine powder tends to undergo dusting at the time of dilution to prepare an application solution, such being undesirable to the health of the operator, and a dividing or dosing operation of the formulation tends to be difficult.

A flowable formulation such as SC or EW is a formulation having such drawbacks in dosing and dusting of the wettable powder eliminated as it is formulated into a suspended or emulsified formulation, but it is a liquid formulation having a relatively high viscosity, whereby it has a problem relating to discharge from a container, deposition of the formulation to the container or the disposal of the used container.

Accordingly, with respect to a formulation to be applied as diluted with water, there has been an attempt in recent years to granulate the wettable powder. The granular wettable powder is one prepared by mixing a pesticidal active ingredient, a surfactant and, if necessary, other adjuvants, followed by granulation into granules. By the granulation of the wettable powder, the problems attributable to the drawbacks in dosing, dusting and bulkiness of the wettable powder and attributable to the viscosity of the flowable formulation can be eliminated.

As a granulation method for a granular composition such as a granule or a granular wettable powder, an extrusion granulation method, a spray drying granulation method, a fluidized bed granulation method, a tumbling granulation method, a compression granulation method, a coating granulation method, etc. may be mentioned. Among them, a kneading granulation method is a granulation method useful for both the granule and the granular wettable powder, and it is a method for granulation by means of an extrusion granulator while kneading by adding water to a mixture comprising a pesticidal active ingredient and a carrier, having other adjuvants such as surfactant and a binder added, as the case requires. This method has a merit such that the granulation installation and operation costs are inexpensive among various granulation methods. However, it has a drawback such that the nature of the kneaded product is substantially influenced by the content of the pesticidal active ingredient, and, particularly, in the case of a granular wettable powder having a high content of the pesticidal active ingredient, the granulation ability tends to be remarkably low.

As a method to solve such problems, there has been proposed a method of incorporating a surfactant and bentonite (JP-A-62-263101, JP-A-60-258101), a method of incorporating a sulfosuccinic acid diester type surfactant (JP-A-7-126106) or a method of incorporating calcium carbonate and a sulfosuccinic acid diester type surfactant (JP-A-57-209634). However, the method of incorporating bentonite has a drawback that the alkaline nature of the bentonite is likely to cause decomposition of the pesticidal active ingredient, whereby the applicable range of the pesticidal active ingredient is very limited. Further, the granulation properties of these conventional granular compositions were very much influenced by the content, the type and the nature of the pesticidal active ingredient and did not necessary show adequate granulation properties.

It is an object of the present invention to improve the granulation properties of a granular composition without being affected by the content, the type and the nature of the pesticidal active ingredient.

DISCLOSURE OF THE INVENTION

In summary of the present invention, the first invention of the present invention is an invention relating to a granular composition which comprises a pesticidal active ingredient and a highly pure quartz powder as essential components and which is obtained by an extrusion granulation method.

Further, the second invention of the present invention is an invention relating to a process for producing the granular composition of the above first invention, which comprises blending a pesticidal active ingredient and a highly pure quartz powder as essential components, and granulation by an extrusion granulation method.

The present inventors have conducted a study to solve the above-mentioned problems of conventional granular wettable powders and as a result, they have found that a granular composition comprising pesticidal active ingredient particles and a highly pure quartz powder, preferably further containing a surfactant, is capable of improving the granulation properties of the granular composition without being affected by the content, the type and the nature of the pesticidal active ingredient, and have accomplished the present invention.

BEST MODE FOR CARRYING OUT THE INVENTION

Now, the present invention will be described in detail.

The pesticidal active ingredient to be used in the present invention may be any one so long as it is a compound commonly useful as a pesticide such as an insecticide, a fungicide, a herbicide or a plant growth regulator, but particularly preferably a solid pesticidal active ingredient. Further, such compounds may be used alone or in combination of two or more types. As specific examples, the following may be mentioned, but the active ingredient is not limited thereto. Further, their geometrical isomers and optical isomers are also included. As the names of pesticidal active ingredients, classified names disclosed in Noyakubinran 2000, compiled and published by JAPAN PLANT PROTECTION ASSOCIATION or ISO names, are used as common names. For those having no classified names or ISO names, their chemical names are used.

Fungicides may, for example, be EDDP, IBP, TPN, isoprothiolane, ipconazole, iprodione, iminoctadine aldecyl acid salt, iminoctadine acetate, imibenconazole, oxadixyl, oxytetracycline, oxolinic acid, kasugamycin, carbendazole, chinomethionate, captan, chloroneb, diethofencarb, diclomezine, dithianon, zineb, diphenoconazole, cyproconazole, dimethirimol, ziram, streptomycin sulfate, dichlofluanid, dazomet, thiadiazin, tiabendazole, thiuram, thiophanate-methyl, tecloftalam, copper telephthalate, triadimefon, triazine, tricyclazole, triflumizole, triforine, tolclofos-methyl, copper nonylphenolsulfonate, validamycin A, bitertanol, hydroxyisoxazole, pyrazophos, pyrifenox, pyroquilon, vinclozolin, fenarimol, phthalide, blasticidin S, fluazinam, fluoroimide, flusulfamide, flutolanil, prochloraz, procymidone, propamocarb hydrochloride, propiconazole, propineb, probenazole, hexaconazole, benomyl, pefurazoate, pencycuron, benthiazole, fosetyl, a polyoxin composite, polycarbamate, formaldehyde, manzeb, maneb, myclobutanil, methasulfocarb, metalaxyl, mepanipyrim, mepronil, hydrated sulfur, live spores of Trichoderma, copper (basic copper chloride, basic copper sulfate, cupric hydroxide or anhydrous copper sulfate), iron methane arsonate, iron ammonium methane arsonate, 8-hydroxyquinoline copper, sulfur, zinc sulfate, acibenzolar-S-methyl, azoxystrobin, kresoxim methyl, metominostrobin, carpropamid, thifluzamide, tetraconazole, furametpyr, fludioxonil, dimethomorph, diflumetorim, cyprodinil and fenhexamide.

Insecticides may, for example, be BPMC, BPPS, BRP, BT-produced crystal toxin, BT live spore-produced crystal toxin, CVMP, CVP, CYAP, DDVP, DEP, DMTP, ECP, EPN, ESP, MEP, MIPC, MPP, MTMC, NAC, PAP, PHC, PMP, XMC, acrinathrin, acetamiprid, acephate, amitraz, alanycarb, allethrin, isoxathion, imidacloprid, ethiofencarb, ethion, ethylthiometon, ethofenprox, ethoprophos, oxamyl, okimelanolure, carbam, cartap hydrochloride, carbosulfan, chinomethionat, clofentezine, chloropicrin, chlorpyrifos, chlorpyrifosmethyl, chlorphenapyr, chlorfluazuron, diatomaceous earth, kelthane, cycloprothrin, cyhalothrin, cyfluthrin, cypermethrin, dimethylvinphos, dimethoate, silafluofen, sulprofos, diazinon, thiodicarb, thiocyclam, thiometon, tetradifon, tebufenozide, tebufenpyrad, tefluthrin, teflubenzuron, derris, tralomethrin, rape seed oil, nitenpyram, vamidothion, halfenprox, bifenthrin, pyraclofos, pyridaphenthion, pyridaben, pirimicarb, pyrimidifen, pirimiphos-methyl, fipronil, phenisobromolate, fenoxycarb, fenothiocarb, fenvalerate, fenpyroximate, fenpropathrin, buprofezin, furathiocarb, flucythrinate, fluvalinate, flufenoxuron, prochloraz, prothiofos, propaphos, profenofos, hexathiazox, permethrin, bensultap, benzoepin, benzomate, benfuracarb, phosalone, fosthiazate, a polynactins composite, machine oil, malathon, methomyl, monocrotophos, resmethrin, levamisole hydrochloride, fenbutatin oxide, morantel tartarate, methyl bromide, pyrethrins, nicotine sulfate, emamectin benzoate, milbemectin spinosad, etoxazole, lufenuron, diafenthiuron, pymetrozine and acequinocyl.

Herbicides may, for example, be 2,4-PA, ACN, CAT, CNP, DCNU, DCPA, DPA, MBPMC, MCC, MCP, MCPB, MCPP, MDBA, PAC, SAP, TCTP, ioxynil, asulam, atrazine, amiprofosmethyl, ametryn, alachlor, alloxydim, isouron, isoxaben, ammonium imazaquin, imazapyr, imazosulfuron, esprocarb, ethidimuron, etobenzanid, disodium endothal, oxadiazon, orthobencarb, karbutilate, quizalofop-ethyl, quinclorac, ammonium glyphosate, isopropylamine glyphosate, trimesium glyphosate, glufosinate, chlomethoxynil, chlorphthalim, cyanazin, diquat, dithiopyr, siduron, cinsulfuron, cyhalofop-butyl, diphenamid, dimethametryn, simetryn, dimepiperate, cinmethylin, sethoxydim, terbacil, daimuron, dazomet, thiazafluron, tetrapion, thenylchlor, tebuthiuron, triclopyr, trifluralin, naproanilide, napropamide, nicosulfuron, paraquat, halosulfuron-methyl, bialaphos, picloram, bifenox, piperophos, pyrazoxyfen, pyrazosulfuron-ethyl, pyrazolynate, pyridate, pyributicarb, fenoxaprop-ethyl, phenothiol, phenmedipham, butachlor, butamifos, flazasulfuron, fluazifop, pretilachlor, prodiamine, propyzamide, bromacil, prometryn, bromobutide, hexazinone, beslogine, bensulfuron-methyl, benzofenap, bentazone, sodium bentazone, thiobencarb, pendimethalin, benfuresate, methyldymron, metsulfuron-methyl, metolachlor, metribuzin, mefenacet, molinate, linuron, linuron, lenacil, sodium chloride, cafenstrole, pyriminobacmethyl, azimsulfron, diflufenican, sodium bispyribac, cyclosulfamuron, triaziflam, pentoxazone, isopropylamine MDBA, clethodim, ethoxysulfuron, ammonium imazamox, desmedipham, pyraflufen-ethyl and indanofan.

Plant growth regulators may, for example, be 1-naphthylacetamide, 4-CPA, MCPB, ancymidol, inabenfide, indole butyric acid, uniconazole P, ethychlozate, ethephon, oxyethylene docosanol, oxine sulfate, cloxyfonac, chlormequat, chlorella extract, choline chloride, dichlorprop, dikegulac, gibberelline, decyl alcohol, pacrobutrazol, paraffin, piperonyl butoxide, flurprimidol, prohexadione-calcium, benzylaminopurine, pendimethalin, forchlorfenuron, hydradicholine maleate, hydrazide maleate, mepiquat chloride, mefluidide, wax and calcium peroxide, but not restricted to these.

The concentration of such pesticidal active ingredients in the granular composition is not particularly limited. However, it is usually preferably at most 85 wt%, particularly preferably from about 0.1 to 75 wt%, more preferably from about 1 to 50 wt%, from the viewpoint of the granulation properties and bioactivities.

In the present invention, the highly pure quartz powder means one whereby the diffraction peaks obtained by powder X-ray diffraction have the three strong X-ray powder diffraction values of quartz (Science Chronology, vol. 72, 1999, published on November 30, 1998, p. 731, compiled by National Astronomical Observatory, published by Maruzen Co., Ltd.). It is not required that no diffraction peak other than the diffraction peaks of quartz, is observed. However, the peak intensity ratio of (the maximum peak intensity among diffraction peaks of other than quartz)/(the maximum peak intensity among the diffraction peaks of quartz) is not more than 0.1. It is particularly preferably a highly pure quartz powder having no diffraction peak attributable to kaolinite, halloysite, pyrophyllite observed. The highly pure quartz powder of the present invention preferably has a volume median diameter of from 2 to 15 $\mu$m, more preferably from 2.5 to 10 $\mu$m. Specifically, it may, for example, be jyunkei clay, tokuhun clay, ohira clay, ohira DL under clay or ohira DL clay, tradename of Neoraito Kosan K.K., ohira clay, ohira DL under clay or ohira DL clay, tradename of Miyaki kogyo K.K., or ohira clay, ohira DL under clay or ohira DL clay, tradename of Nippon Taika Genryo K.K.

In the present invention, the content of the highly pure quartz powder in the granular composition may suitably be changed depending upon the concentration of the active ingredient in the formulation. It is usually from 5 to 95 wt%. With a view to improving the granulation properties, it is more preferred to add it in an amount of from about 15 to 95 wt%.

As the surfactant to be used in the present invention, any of a nonionic surfactant, a cationic surfactant and an anionic surfactant which are commonly used in granules or granular wettable powders, may be employed. Such surfactants may be used alone or in combination as a mixture of two or more of them. The content of such surfactants in the granular composition is usually from 0.01 to 25 wt%. Especially, with a view to improving the granulation properties or improving the disintegration dispersibility in water in the case of a granular wettable powder, the content is more preferably from 0.1 to 15 wt%.

The nonionic surfactant may be any nonionic surfactant such as a polyoxyethylene alkyl ether, a polyoxyethylene alkyl phenyl ether, a polyoxyethylene polyoxypropylene ether, a polyoxyethylene alkyl ester, a polyoxyethylene sorbitan alkyl ester, a polyoxyethylene polyoxypropylene block copolymer, a sorbitan alkyl ester or a higher fatty acid alkanolamide. Such nonionic surfactants may be used alone or in combination as a mixture of two or more of them.

The cationic surfactant may be any one such as an alkylamine salt or a quaternary ammonium salt. Such cationic surfactants may be used alone or in combination as a mixture of two or more of them.

The anionic surfactant may, for example, be a naphthalenesulfonic acid polycondensate, an alkenylsulfonate, a naphthalenesulfonate, a formalin condensate of a naphthalenesulfonate, a formalin condensate of an alkylnaphthalenesulfonate, a lignin sulfonate, an alkylallylsulfonate, an alkylallyl sulfonate sulfate, a polystyrene sulfonate, a polycarboxylate, a polyoxyethylenealkyl ether sulfate, a polyoxyethylenealkylallyl ether sulfate, an alkylsulfosuccinate, an alkyl sulfate, an alkyl ether sulfonate, or a higher fatty acid alkali salt. Such anionic surfactants may be used alone or in combination as a mixture of two or more of them.

As the surfactant to be used in the present invention, among the above mentioned, an anionic surfactant is preferred, and particularly, an alkyl sulfate, an alkylsulfosuccinate or a polycarboxylate is preferred.

The composition of the present invention may further contain a binder such as carboxymethylcellulose, polyvinyl alcohol, polyvinylpyrrolidone, dextrin, starch or $\alpha$-modified starch, a physical property-improving agent such as sodium tripolyphosphate, an arginate or a polyacrylate and, if necessary, other adjuvants such as a water soluble polymer, a solvent, an absorptive fine powder, a binder, a pulverization assistant, a decomposition-preventing agent, a colorant, a defoaming agent, an effect-improving agent, a perfume or a builder.

The composition of the present invention may contain a carrier for formulation, such as a mineral carrier other than the highly pure quartz powder, a water-soluble carrier or a vegetable carrier. The mineral carrier may, for example, be diatomaceous earth, talc, clay, calcium carbonate, acid clay, attapulgite, zeolite, sericite, sepiolite or calcium silicate. The water-soluble carrier may, for example, be ammonium sulfate, urea, dextrin, lactose, fructose, sucrose glucose, sodium chloride, Glaubers salt, sodium carbonate, sodium bicarbonate, maleic acid, citric acid, fumaric acid, malic acid or polyethylene glycol having an average molecular weight of from 6000 to 20000. The vegetable carrier may, for example, be wheat flour, wood powder, starch, bran, soy flour or a pulverized product of fiber plant. The content of such a carrier in the composition of the present invention is usually from 0.1 to 90 wt%, preferably from 0.5 to 75 wt%.

The composition of the present invention can be produced, for example, by the following method, but the production method is not limited thereto. Namely, to a pesticidal active ingredient, a binder, a physical property-improving agent, and the component-stabilizer, etc. are added, and if necessary, pulverized by e.g. an impact pulverizer, whereupon a highly pure quartz powder and, if necessary, a mineral powder other than the highly pure quartz powder, are mixed, water is added, and the mixture is kneaded and then granulated usually by an extrusion granulator employing a screen for a particle size of from 0.1 to 5 mm, preferably from 0.2 to 2 mm, and the granulated product is dried and sieved by a suitable screen for a predetermined grain size, to obtain the composition of the present invention.

Further, it is also possible that to a proper amount of water, a pesticidal active ingredient, a surfactant and if necessary, other components such as a carrier, are added in necessary amounts, followed by pulverization by means of a wet type pulverizer such as a ball mill, a Dyno-mill or a sand grinder. To the obtained aqueous suspension, other components such as a surfactant, a carrier, etc., may be mixed in a suitable amount, as the case requires, to obtain a kneaded product which can be granulated by an extrusion granulator.

The composition of the present invention thus obtained has merits such that (1) it is excellent in the granulation properties by an extrusion granulation method irrespective of the content, the type and the nature of the pesticidal active ingredient, (2) while the decrease in the granulation ability is problematic in many cases particularly with a granular wettable powder having a relatively small screen pore size, the composition of the present invention is excellent in the granulation properties irrespective of the screen pore diameter of the extrusion granulator, (3) it is excellent in the granulation properties and has a wide margin for the addition of water to facilitate the grain size adjustment, (4) the surface of the granulated product is smooth, thus minimizing powdering due to abrasion of the grains to one another, and (5) in the case of a granular wettable powder, it is excellent in the disintegration dispersibility in water. Thus, it can widely be employed as a pesticide such as a fungicide, an insecticide, a herbicide or a plant growth regulator.

EXAMPLES

Now, the present invention will be described in further detail with reference to Examples, Comparative Examples and Test Examples of the present invention. However, the present invention is by no means restricted thereto. Further, "parts" means "parts by weight".

Further, kneading in Examples and Comparative Examples was carried out by a desk top twin screw kneader (manufactured by IKEDARIKA Inc.), and extrusion granulation was carried out by RG-5M (extrusion granulator, manufactured by Kikusui Seisakusho Ltd.). Further, the highly pure quartz powder used in Examples 1 to 11 was one corresponding to such that the diffraction peaks obtained by powder X-ray diffraction have three strong X-ray powder diffraction values of quartz (disclosed in the above-mentioned Science Chronology, compiled by National Astronomical Observatory, and the diffraction peak intensity ratio of (the maximum peak intensity among diffraction peaks of other than quartz)/(the maximum peak intensity among the diffraction peaks of quartz) was not more than 0.1. Further, no diffraction peak attributable to kaolinite, halloysite, pyrophyllite, was observed.

EXAMPLE 1

4 Parts of BPMC heated and melted at 60°C and adsorbed on 5 parts of white carbon, 3.5 parts of cartap hydrochloride, 2 parts of polyvinyl alcohol and 85.5 parts of a highly pure quartz powder (volume median diameter: 7.2 $\mu$m) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen with a pore size of 1.0 mm mounted. After drying at 60°C, the grain size was adjusted by a screen of from 12 to 24 mesh to obtain a granule.

EXAMPLE 2

4 Parts of BPMC heated and melted at 60°C and adsorbed on 5 parts of white carbon, 3.5 parts of cartap hydrochloride, 0.5 part of sodium alkylsulfate (New Calgen WG-6, tradename of Takemoto Oil & Fat Co., Ltd.), 2 parts of polyvinyl alcohol and 85 parts of a highly pure quartz powder (volume median diameter: 7.2 $\mu$m) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore diameter of 1.2 mm mounted. After drying at 60°C, the grain size was adjusted by a screen of from 12 to 24 mesh to obtain a granule.

EXAMPLE 3

16 Parts of BPMC heated and melted at 60°C and adsorbed on 15 parts of white carbon, 14 parts of cartap hydrochloride, 2 parts of $\alpha$-modified starch and 53 parts of a highly pure quartz powder (volume median diameter: 7.2 $\mu$m) were pulverized by an impact pulverizer and then, put into a desk top twin screw kneader (manufactured by IKEDARIKA Inc.), and about 20% of distilled water was added, followed by kneading for 5 minutes and then by granulation by means of an extrusion granulator (RG-5M, manufactured by Kikusui Seisakusho Ltd.) having a screen having a pore size of 1.0 mm mounted. After drying at 60°C, the grain size was adjusted by a screen of from 12 to 24 mesh to obtain a granule.

EXAMPLE 4

16 Parts of BPMC heated and melted at 60°C and adsorbed on 15 parts of white carbon, 14 parts of cartap hydrochloride, 2 parts of $\alpha$-modified starch and 53 parts of a highly pure quartz powder (volume median diameter: 7.2 $\mu$m) were pulverized by an impact pulverizer and then, put into a desk top twin screw kneader (manufactured by IKEDARIKA Inc.), and about 20% of distilled water containing 0.5 part of sodium dioctylsulfosuccinate, was added, followed by kneading for 5 minutes and then by granulation by means of an extrusion granulator (RG-5M, manufactured by Kikusui Seisakusho Ltd.) having a screen having a pore size of 1.2 mm mounted. After drying at 60°C, the grain size was adjusted by a screen of from 12 to 24 mesh to obtain a granule.

EXAMPLE 5

3 Parts of PHC, 1.5 parts of carboxymethylcellulose, 2 parts of white carbon and 93.5 parts of a highly pure quartz powder (volume median diameter: 8.8 $\mu$m) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 1.0 mm mounted. After drying at 60°C, the grain size was adjusted by a screen of from 12 to 24 mesh to obtain a granule.

EXAMPLE 6

4 Parts of cartap hydrochloride, 1.5 parts of carboxymethylcellulose, 5 parts of diatomaceous earth and 89.5 parts of a highly pure quartz powder (volume median diameter: 8.8 $\mu$m) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.8 mm mounted. After drying at 60°C, the grain size was adjusted by a screen of from 12 to 24 mesh to obtain a granule.

EXAMPLE 7

96.2 Parts of mepronil and 3.8 parts of white carbon were uniformly mixed and then finely pulverized by a Jet-O-mizer to obtain a mepronil premix. 78 Parts of this mepronil premix, 2 parts of sodium alkylsulfate (New Calgen WG-6, tradename of Takemoto Oil & Fat Co., Ltd.), 6 parts of sodium alkylnaphthalenesulfonate (New Calgen WG-1, tradename of Takemoto Oil & Fat Co., Ltd.), 3 parts of calcium lignin sulfonate and 11 parts of a highly pure quartz powder (volume median diameter: 5.5 $\mu$m) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

EXAMPLE 8

94.4 Parts of mepanipyrim and 5.6 parts of white carbon were uniformly mixed and then finely pulverized by a Jet-O-mizer to obtain a mepanipyrim premix. 53 Parts of this mepanipyrim premix, 2 parts of sodium alkylsulfate (New Calgen WG-6, tradename of Takemoto Oil & Fat Co., Ltd.), 5 parts of sodium alkylnaphthalenesulfonate (New Calgen WG-1, tradename of Takemoto Oil & Fat Co., Ltd.), 2 parts of calcium lignin sulfonate and 38 parts of a highly pure quartz powder (volume median diameter: 5.5 $\mu$m) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

EXAMPLE 9

96.8 Parts of tricyclazole and 3.2 parts of white carbon were uniformly mixed and then finely pulverized by a Jet-O-mizer to obtain a tricyclazole premix. 77.5 Parts of this tricyclazole premix, 2 parts of sodium alkylsulfate (New Calgen WG-6, tradename of Takemoto Oil & Fat Co., Ltd.), 9 parts of a formalin condensate of sodium alkylnaphthalenesulfonate (Demol MS, tradename of Kao Corporation), 5 parts of potassium chloride and 6.5 parts of a highly pure quartz powder (volume median diameter: 5.5 $\mu$m) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

EXAMPLE 10

1 Part of prohexadione-calcium, 1 part of white carbon, 2 parts of sodium alkylsulfate (New Calgen WG-6, tradename of Takemoto Oil & Fat Co., Ltd.), 6 parts of a polycarboxylate (New Calgen WG-5, tradename of Takemoto Oil & Fat Co., Ltd.) and 90 parts of a highly pure quartz powder (volume median diameter: 4.1 $\mu$m) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

EXAMPLE 11

5 Parts of a bispyribac-sodium, 1 part of white carbon, 2 parts of sodium alkylsulfate (New Calgen WG-6, tradename of Takemoto Oil & Fat Co., Ltd.), 6 parts of a formalin condensate of sodium alkylnaphthalenesulfonate (Demol MS, tradename of Kao Corporation) and 86 parts of a high pure quartz powder (volume median diameter: 4.1 $\mu$m) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

COMPARATIVE EXAMPLE 1

4 Parts of BPMC heated and melted at 60°C and adsorbed on 5 parts of white carbon, 3.5 parts of cartap hydrochloride, 2 parts of polyvinyl alcohol and 85.5 parts of a clay (volume media diameter: 7.3 $\mu$m, by the powder X-ray diffraction, it was identified to be a mixture of kaolinite, halloysite, pyrophyllite and quartz, and the diffraction peak intensity ratio of (the maximum peak intensity among diffraction peaks of other than quartz)/(the maximum peak intensity among the diffraction peaks of quartz) was 0.50), were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 1.0 mm mounted. After drying at 60°C, the grain size was adjusted by a screen of from 12 to 24 mesh to obtain a granule.

COMPARATIVE EXAMPLE 2

16 Parts of BPMC heated and melted at 60°C and adsorbed on 15 parts of white carbon, 14 parts of cartap hydrochloride, 2 parts of α-modified starch and 53 parts of a clay (volume media diameter: 7.3 μm, by the powder X-ray diffraction, it was identified to be a mixture of kaolinite, halloysite, pyrophyllite and quartz, and the diffraction peak intensity ratio of (the maximum peak intensity among diffraction peaks of other than quartz)/(the maximum peak intensity among the diffraction peaks of quartz) was 0.50), were pulverized by an impact pulverizer and then put into a desk top twin screw kneader (manufactured by IKEDARIKA Inc.), and about 20% of distilled water was added, followed by kneading for 5 minutes and then by granulation by means of an extrusion granulator (RG-5M, manufactured by Kikusui Seisakusho Ltd.) having a screen having a pore size of 1.0 mm mounted. After drying at 60°C, the grain size was adjusted by a screen of from 12 to 24 mesh to obtain a granule.

COMPARATIVE EXAMPLE 3

3 Parts of PHC, 1.5 parts of carboxymethylcellulose, 2 parts white carbon and 93 parts of calcium carbonate (volume media diameter: 6.5 μm) were pulverized by an impact pulverizer and then put into a desk top twin screw kneader (manufactured by IKEDARIKA Inc.), and about 15% of distilled water containing 0.5 part of sodium dioctylsulfosuccinate, was added, followed by kneading for 5 minutes and then by granulation by means of an extrusion granulator (RG-5M, manufactured by Kikusui Seisakusho Ltd.) having a screen having a pore size of 1.0 mm mounted. After drying at 60°C, the grain size was adjusted by a screen of from 12 to 24 mesh to obtain a granule.

COMPARATIVE EXAMPLE 4

4 Parts cartap hydrochloride, 1.5 parts of carboxymethylcellulose, 5 parts of diatomaceous earth and 89.5 parts of a clay (volume media diameter: 7.3 μm, by the powder X-ray diffraction, it was identified to be a mixture of kaolinite, halloysite, pyrophyllite and quartz, and the diffraction peak intensity ratio of (the maximum peak intensity among diffraction peaks of other than quartz)/(the maximum peak intensity among the diffraction peaks of quartz) was 0.50), were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.8 mm mounted. After drying at 60°C, the grain size was adjusted by a screen of from 12 to 24 mesh to obtain a granule.

COMPARATIVE EXAMPLE 5

96.2 Parts of mepronil and 3.8 parts of white carbon were uniformly mixed and then finely pulverized by a Jet-O-mizer to obtain a mepronil premix. 78 Parts of this mepronil premix, 2 parts of sodium alkylsulfate (New Calgen WG-6, tradename of Takemoto Oil & Fat Co., Ltd.), 6 parts of sodium alkylnaphthalenesulfonate (New Calgen WG-1, tradename of Takemoto Oil & Fat Co., Ltd.), 3 parts of calcium lignin sulfonate and 11 parts of a clay (volume median diameter: 7.3 μm) by the powder X-ray diffraction, it was identified to be a mixture of kaolinite, halloysite, pyrophyllite and quartz, and the diffraction peak intensity ratio of (the maximum peak intensity among diffraction peaks of other than quartz)/(the maximum peak intensity among the diffraction peaks of quartz) was 0.50) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen haying a pore size of 0.6 mm mounted. After drying at 50°C, the grain size was adjusted by a screen of from 16 to 48 mesh to obtain a granular wettable powder.

COMPARATIVE EXAMPLE 6

94.4 Parts of mepanipyrim and 5.6 parts of white carbon were uniformly mixed and then finely pulverized by a Jet-O-mizer to obtain a mepanipyrim premix. 53 Parts of this mepanipyrim premix, 2 parts of sodium alkylsulfate (New Calgen WG-6, tradename of Takemoto Oil & Fat Co., Ltd.), 5 parts of sodium alkylnaphthalenesulfonate (New Calgen WG-1, tradename of Takemoto Oil & Fat Co., Ltd.), 2 parts of calcium lignin sulfonate and 37 parts of calcium carbonate (volume median diameter: 6.5 μm) were pulverized by an impact pulverizer and then put into a desk top twin screw kneader (manufactured by IKEDARIKA Inc.), and about 15% of distilled water containing 1 part of sodium dioctylsulfosuccinate was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

COMPARATIVE EXAMPLE 7

96.8 Parts of tricyclazole and 3.2 parts of white carbon were uniformly mixed and then finely pulverized by a Jet-O-mizer to obtain a tricyclazole premix. 77.5 Parts of this tricyclazole premix, 2 parts of sodium alkylsulfate (New Calgen WG-6, tradename of Takemoto Oil & Fat Co., Ltd.), 9 parts of a formalin condensate of sodium alkylnaphthalenesulfonate (Demol MS, tradename of Kao Corporation), 5 parts of potassium chloride and 6.5 parts of a clay (volume median diameter: 4.5 $\mu$m, by the powder X-ray diffraction, it was identified to be a mixture of kaolinite, halloysite, pyrophyllite and quartz, and the diffraction peak intensity ratio of (the maximum peak intensity among diffraction peaks of other than quartz)/(the maximum peak intensity among the diffraction peaks of quartz) was 0.50) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

COMPARATIVE EXAMPLE 8

1 Part of prohexadione-calcium, 1 part of white carbon, 2 parts of sodium alkylsulfate (New Calgen WG-6, tradename of Takemoto Oil & Fat Co., Ltd.), 6 parts of a polycarboxylate (New Calgen WG-5, tradename of Takemoto Oil & Fat Co., Ltd.) and 90 parts of calcium carbonate (volume median diameter: 6.5 $\mu$m) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

COMPARATIVE EXAMPLE 9

1 Part of prohexadione-calcium, 1 part of white carbon, 2 parts of sodium alkylsulfate (New Calgen WG-6, tradename of Takemoto Oil & Fat Co., Ltd.), 6 parts of a polycarboxylate (New Calgen WG-5, tradename of Takemoto Oil & Fat Co., Ltd.) and 90 parts of a clay (volume median diameter: 2.2 $\mu$m) by the powder X-ray diffraction, it was identified to be a mixture of kaolinite, halloysite, pyrophyllite and quartz, and the diffraction peak intensity ratio of (the maximum peak intensity among diffraction peaks of other than quartz)/(the maximum peak intensity among the diffraction peaks of quartz) was 0.17 were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

COMPARATIVE EXAMPLE 10

1 Part of prohexadione-calcium, 1 part of white carbon, 2 parts of sodium alkylsulfate (New Calgen WG-6, tradename of Takemoto Oil & Fat Co., Ltd.), 6 parts of a polycarboxylate (New Calgen WG-5, tradename of Takemoto Oil & Fat Co., Ltd.) and 90 parts of a clay (volume median diameter: 17.4 $\mu$m) by the powder X-ray diffraction, it was identified to be a mixture of kaolinite, halloysite, pyrophyllite and quartz, and the diffraction peak intensity ratio of (the maximum peak intensity among diffraction peaks of other than quartz)/(the maximum peak intensity among the diffraction peaks of quartz) was 0.50 were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

COMPARATIVE EXAMPLE 11

5 Parts of a bispyribac-sodium, 1 part of white carbon, 2 parts of sodium alkylsulfate (New Calgen WG-6, tradename of Takemoto Oil & Fat Co., Ltd.), 6 parts of a formalin condensate of sodium alkylnaphthalenesulfonate (Demol MS, tradename of Kao Corporation) and 86 parts of a clay (volume median diameter: 4.5 $\mu$m), by the powder X-ray diffraction, it was identified to be a mixture of kaolinite, halloysite, pyrophyllite and quartz, and the diffraction peak intensity ratio of (the maximum peak intensity among diffraction peaks of other than quartz)/(the maximum peak intensity among the diffraction peaks of quartz) was 0.50) were pulverized by an impact pulverizer and then put into a desk top twin screw kneader (manufactured by IKEDARIKA Inc.), and about 15% of distilled water was added, followed by kneading for 5 minutes and then by granulation by means of an extrusion granulator (RG-5M, manufactured by Kikusui Seisakusho Ltd.) having a screen having a pore size of 0.6 mm mounted. After drying at 50°C, the grain size was adjusted by a screen of from 16 to 48 mesh to obtain a granular wettable powder.

TEST EXAMPLE 1

About 500 g of a kneaded product obtained by the desk top twin screw kneader (manufactured by IKEDARIKA Inc.) in accordance with each Example or Comparative Example, was subjected to granulation operation for 4 minutes by means of an extrusion granulator RG-5M (manufactured by Kikusui Seisakusho Ltd.), whereby the weight of granules granulated in 2 minutes were measured, and the granulation property was evaluated by the weight of granules per 1 minute.

Table 1

| Tested pesticide | Weight of granules (g/min) | Tested pesticide | Weight of granules (g/min) |
|---|---|---|---|
| Example 1 | 78 | Comparative Example 1 | 48 |
| Example 2 | 86 | Comparative Example 2 | 41 |
| Example 3 | 73 | Comparative Example 3 | 50 |
| Example 4 | 83 | Comparative Example 4 | 47 |
| Example 5 | 106 | Comparative Example 5 | 28 |
| Example 6 | 96 | Comparative Example 6 | 33 |
| Example 7 | 65 | Comparative Example 7 | 29 |
| Example 8 | 77 | Comparative Example 8 | 38 |
| Example 9 | 67 | Comparative Example 9 | 19 |
| Example 10 | 89 | Comparative Example 10 | 10 |
| Example 11 | 88 | Comparative Example 11 | 35 |

TEST EXAMPLE 2

With respect to a sample immediately after the preparation of the formulation obtained in each Example or Comparative Example, the disintegration dispersibility in water and suspensibility were measured by the following methods. In a constant temperature water tank of 25°C, a 250 ml cylinder having a stopper and containing 125 ml of three degree hard water, was set. 250 mg of each granular wettable powder was put into the cylinder, and falling/restoring of the cylinder was repeated once every 2 seconds, and the number of falling/restoring times until the granular wettable powder became completely disintegrated and dispersed, was taken as the disintegration dispersibility in water. Then, this cylinder was left to stand still in a constant temperature water tank of 25°C, and upon expiration of 15 minutes, 25 ml was sampled from the center portion of the cylinder, whereupon water was evaporated, and then the pesticidal active ingredient was analyzed by high performance liquid chromatography, and the suspensibility was obtained.
The suspensibility is obtained by the following formula.

$$\text{Suspensibility (\%)} = [(B \times 10)/A] \times 100$$

A: The amount of the active ingredient in the initial sample (the sample immediately after the preparation)
B: The amount of the active ingredient in the sampled liquid.

Table 2

| Tested pesticide | Disintegration dispersibility in water (times) | Suspensibility (%) |
|---|---|---|
| Example 7 | 5 | 98.6 |
| Example 8 | 5 | 99.1 |
| Example 9 | 4 | 97.3 |
| Example 10 | 5 | 92.4 |
| Comparative Example 5 | 9 | 81.7 |
| Comparative Example 6 | 10 | 83.7 |
| Comparative Example 7 | 9 | 85.1 |
| Comparative Example 8 | 10 | 80.2 |

INDUSTRIAL APPLICABILITY

With the granular composition of the present invention, the granulation properties can be improved without being affected by the content, type or nature of the pesticidal active ingredient or by the prescribed grain size of the granular composition.

**Claims**

1.   A granular composition which comprises a pesticidal active ingredient and a highly pure quartz powder as essential components and which is obtainable by an extrusion granulation method,
wherein the highly pure quartz powder has a purity such that in the X-ray diffraction, (the maximum peak intensity among diffraction peaks of other than quartz)/(the maximum peak intensity among the diffraction peaks of quartz) is not more than 0.1.

2.   The granular composition according to Claim 1, wherein the highly pure quartz powder has a volume median diameter of from 2 to 15 $\mu$m.

3.   The granular composition according to Claim 1, wherein the highly pure quartz powder has no diffraction peak attributable to kaolinite, halloysite or pyrophyllite.

4.   The granular composition according to any one of Claims 1 to 3, wherein the pesticidal active ingredient is in an amount of from 0.1 to 75 wt% and the highly pure quartz powder is in an amount of from 5 to 95 wt%, in the granular composition.

5.   The granular composition according to any one of Claims 1 to 4, which further contains a surfactant.

6.   The granular composition according to Claim 5, wherein the surfactant is an anionic surfactant.

7.   The granular composition according to Claim 5 or 6, wherein the surfactant is at least one surfactant selected from the group consisting of alkyl sulfates, alkyl sulfosuccinates and polycarboxylates.

8.   The granular composition according to any one of Claims 1 to 7, wherein the granular composition has a grain diameter of from 0.1 to 5 mm.

9.   The granular composition according to any one of Claims 1 to 8, wherein the granular composition is a pesticidal granule.

10.   The granular composition according to any one of Claims 1 to 8, wherein the granular composition is a pesticidal water dispersible granule.

**11.** A process for producing the granular composition as defined in Claim 1, which comprises blending a pesticidal active ingredient and the highly pure quartz powder as defined in claim 1 as essential components, and granulation by an extrusion granulation method.

## Patentansprüche

**1.** Granulatförmige Zusammensetzung, die einen pestizidwirksamen Bestandteil und ein hochreines Quarzpulver als essentielle Komponenten enthält, und die durch ein Extrusionsverfahren erhältlich ist,
worin das hochreine Quarzpulver eine solche Reinheit aufweist, dass in der Röntgenbeugung der Wert (maximale Peak-Intensität unter den von Quarz verschiedenen Beugungs-Peaks)/(maximale Peak-Intensität unter den Beugungs-Peaks von Quarz) nicht mehr als 0,1 beträgt.

**2.** Granulatförmige Zusammensetzung nach Anspruch 1, worin das hochreine Quarzpulver einen mittleren Volumendurchmesser von 2 bis 15 $\mu$m aufweist.

**3.** Granulatförmige Zusammensetzung nach Anspruch 1, worin das hochreine Quarzpulver keinen Beugungs-Peak aufweist, der Kaolinit, Halloysit oder Pyrophyllit zuzuschreiben ist.

**4.** Granulatförmige Zusammensetzung nach einem der Ansprüche 1 bis 3, worin der pestizidwirksame Bestandteil in einer Menge von 0,1 bis 75 Gew.-% und das hochreine. Quarzpulver in einer Menge von 5 bis 95 Gew.-% in der granulatförmigen Zusammensetzung vorhanden ist.

**5.** Granulatförmige Zusammensetzung nach einem der Ansprüche 1 bis 4, die ferner ein oberflächenaktives Mittel enthält.

**6.** Granulatförmige Zusammensetzung nach Anspruch 5, worin das oberflächenaktive Mittel ein anionisches oberflächenaktives Mittel ist.

**7.** Granulatförmige Zusammensetzung nach Anspruch 5 oder 6, worin das oberflächenaktive Mittel mindestens ein oberflächenaktives Mittel ist, ausgewählt aus der Gruppe bestehend aus Alkylsulfaten, Alkylsulfosuccinaten und Polycarboxylaten.

**8.** Granulatförmige Zusammensetzung nach einem der Ansprüche 1 bis 7, worin die granulatförmige Zusammensetzung einen Korndurchmesser von 0,1 bis 5 mm aufweist.

**9.** Granulatförmige Zusammensetzung nach einem der Ansprüche 1 bis 8, worin die granulatförmige Zusammensetzung ein Pestizidgranulat ist.

**10.** Granulatförmige Zusammensetzung nach einem der Ansprüche 1 bis 8, worin die granulatförmige Zusammensetzung ein wasserdispergierbares Pestizidgranulat ist.

**11.** Verfahren zur Herstellung der granulatförmigen Zusammensetzung nach Anspruch 1, das umfasst das Mischen eines wie in Anspruch 1 definierten pestizidwirksamen Bestandteils und des hochreinen Quarzpulvers als essentielle Komponenten, und Granulieren durch ein Extrusionsgranulierverfahren.

## Revendications

**1.** Composition granulaire qui comprend un ingrédient actif pesticide et une poudre de quartz hautement pure en tant que composants essentiels et qui peut être obtenue par un procédé de granulation par extrusion,
dans laquelle la poudre de quartz hautement pure a une pureté telle que dans la diffraction des rayons X, le rapport (intensité de pic maximale parmi les pics de diffraction autres que ceux du quartz)/(intensité de pic maximale parmi les pics de diffraction du quartz) n'est pas supérieur à 0,1.

**2.** Composition granulaire selon la revendication 1, dans laquelle la poudre de quartz hautement pure à un diamètre moyen en volume de 2 à 15 $\mu$m.

3. Composition granulaire selon la revendication 1, dans laquelle la poudre de quartz hautement pure n'a pas de pic de diffraction attribuable à la kaolinite, l'halloysite ou la pyrophyllite.

4. Composition granulaire selon l'une quelconque des revendications 1 à 3, dans laquelle l'ingrédient actif pesticide est en une quantité de 0,1 à 75 % en poids et la poudre de quartz hautement pure est en une quantité de 5 à 95 % en poids, dans la composition granulaire.

5. Composition granulaire selon l'une quelconque des revendications 1 à 4, qui contient en outre un agent tensioactif.

6. Composition granulaire selon la revendication 5, dans laquelle l'agent tensioactif est un agent tensioactif anionique.

7. Composition granulaire selon la revendication 5 ou 6, dans laquelle l'agent tensioactif est au moins un agent tensioactif choisi dans le groupe constitué de sulfates d'alkyle, de sulfosuccinates d'alkyle et de polycarboxylates.

8. Composition granulaire selon l'une quelconque des revendications 1 à 7, laquelle a un diamètre de grain de 0,1 à 5 mm.

9. Composition granulaire selon l'une quelconque des revendications 1 à 8, dans laquelle la composition granulaire est constitué de granulés pesticides.

10. Composition granulaire selon l'une quelconque des revendications 1 à 8, laquelle est constituée de granulés dispersables dans l'eau pesticides.

11. Procédé de production de la composition granulaire telle que définie dans la revendication 1, qui comprend le mélange d'un ingrédient actif pesticide et de la poudre de quartz hautement pure telle que définie dans la revendication 1 en tant que composants essentiels, et une granulation par un procédé de granulation par extrusion.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62263101 A
- JP 60258101 A
- JP 7126106 A
- JP 57209634 A

**Non-patent literature cited in the description**

- *Science Chronology,* 30 November 1998, vol. 72, 731